(19) Europäisches Patentamt
European Patent Office
Office européen des brevets

(11) EP 0 864 406 A2

(12) EUROPEAN PATENT APPLICATION

(43) Date of publication:
**16.09.1998 Bulletin 1998/38**

(51) Int. Cl.[6]: **B27K 3/50**, B27K 3/52

(21) Application number: **97308142.5**

(22) Date of filing: **14.10.1997**

(84) Designated Contracting States:
**AT BE CH DE DK ES FI FR GB GR IE IT LI LU MC NL PT SE**

(30) Priority: **10.03.1997 JP 54739/97**

(71) Applicant: **ROHM AND HAAS COMPANY**
**Philadelphia, Pennsylvania 19106-2399 (US)**

(72) Inventors:
- **Shiraishi, Tetsuji**
  **Honjyo-Shi, Saitama Pref. (JP)**
- **Nagano, Yukihiro**
  **Kodama-Gun, Saitama Pref. (JP)**
- **Niino, Noriaki**
  **Isezaki-Shi, Gunma Pref. (JP)**
- **Sugai, Yoshiaki**
  **Honjyo-Shi, Saitama Pref. (JP)**

(74) Representative:
**Buckley, Guy Julian et al**
**ROHM AND HAAS (UK) LTD.**
**European Operations Patent Department**
**Lennig House**
**2 Mason's Avenue**
**Croydon CR9 3NB (GB)**

(54) **Wood preservative**

(57) Disclosed are novel wood preservative compositions having high resistance to molds. Such compositions contain a combination of an isothiazolone compound and at least one water-soluble copper complex formed from water-insoluble copper salts or copper oxides which have been solubilized with at least one nitrogen-containing compound selected from ammonia, ammonium salts and amines.

EP 0 864 406 A2

## Description

### Background of the Invention

The present invention relates to a wood preservative with excellent chemical stability that prevents the rotting of wood as well as the formation of mold on wood.

Wood is used in a broad range of applications, for example, as a structural material, as an industrial material, and in civil engineering. It is difficult to use for long-term applications, especially outdoors, because it is subject to deterioration through rotting caused by wood decaying organisms. Early types of wood preservatives contained water-soluble copper compounds. The problem with such water-soluble copper compounds was that when such compounds were impregnated into wood, subsequent exposure to rain water tended to wash them out, thereby posing a problem for their outdoor use. To address this issue, alkaline wood preservatives were proposed in which a water-soluble inorganic copper compound (comprised of at least one type selected from copper salts or copper oxides) was solubilized by forming a complex using ammonia, ammonium salts or amines.

When such water soluble complexes are used, the resulting wood preservatives have excellent cost effectiveness, very good application properties, and are effective against wood decay organisms, for example, *Coriolus versicolor* and *Serpula lacrymans*; however, such preservatives are not effective against some types of mold, for example, *penicillium* and *asarum*. In addition, the alkali component of such compositions supplies a source of nitrogen that fosters mold growth. While unlike wood rot, the growth of mold on wood does not affect its strength, it does contaminate the surface and is aesthetically undesirable, thus dramatically detracting from its commercial value.

The use of isothiazolones compounds in wood preservatives have been proposed to protect wood materials from mold: however, as the isothiazolone compounds that are used as anti-mold agents for wood have poor chemical stability in alkaline aqueous solutions, it is difficult to add anti-mold properties by mixing such compounds into conventional wood preservatives such as the previously described inorganic copper complexes in alkaline aqueous solution. This poor chemical stability of isothiazolone compounds when intermixed with such conventional wood preservatives has limited the commercial success of such combination products.

### Summary of the Invention

The present invention is directed to an alkaline wood preservative composition comprising: at least one isothiazolone compound selected from the group consisting of 2-methyl-4-isothiazolin-3-one, 2-octyl-4-isothiazolin-3-one, and 4,5-dichloro-2-octyl4-isothiazolin-3-one; at least one water-insoluble copper complex formed by solubilizing a water-insoluble copper salt or copper oxide with a nitrogen-containing compound selected from the group consisting of ammonia, ammonium salts, and amines; and water.

### Brief Description of the Drawing

Figure **1** is a cross-section of the field anti-mold test system.

Figure **2** is the location of the test specimens in the field anti-mold test system.

### Detailed Description of the Invention

The present invention is based in part on the surprising discovery that certain isothiazolone compounds are stable in alkaline wood preservative compositions such as those containing water-soluble copper complexes. When applied as part of these wood preservative compositions, these isothiazolone compounds do not leach from the wood but remain stable therein, and also impart excellent anti-mold properties to these wood preservative compositions.

The water-soluble copper complexes useful in the wood preservative compositions of the present invention are formed conventionally by solubilizing water-insoluble inorganic copper salts or copper oxides using nitrogen-containing compounds selected from ammonia, ammonium salts, and amines.

Examples of water-insoluble copper salts suitable for use in the water-soluble copper complexes of this invention include, but are not limited to: basic copper carbonate, basic copper acetate, basic copper nitrate, basic copper phosphate, basic copper chloride and copper pyrophosphate. Basic copper carbonate, basic copper phosphate, and copper pyrophosphate are preferred. Examples of a copper oxide which is water-insoluble and suitable for use in this invention include, but are not limited to, cupric oxide.

Nitrogen-containing compounds suitable for solubilizing the water-insoluble copper salts or copper oxides include, but are not limited to: ammonia; ammonium salts such as ammonium bicarbonate; and amines such as monoethanol amine, diethanol amine, triethanol amine, ethylene diamine, 1,2-propane diamine, 1,3-propane diamine, N,N-dimethylethylene diamine, and N,N-diethylethylene diamine.

In general, the alkaline wood preservative compositions of the present invention should have a pH of from 8 to 13. The concentration range of the isothiazolinone compound that is intermixed therein is, from both cost and effectiveness perspectives, from 10 to 10,000 ppm, When the wood is saturated, the minimum effective concentration of the isothiazolone is 10 ppm or more, preferably from 30 to 200 ppm.

The wood preservative compositions of the present invention may be applied to the surface of the wood to be treated, incorporated into the wood by immersion, or impregnated under a suitable pressure application means either as is, or after further dilution in water or an organic solvent and water.

The wood preservative compositions of this invention may be prepared, for example, by the following method. At least one type of copper compound selected from water-insoluble copper salts or copper oxides is first dispersed in water. Then, at least one type of nitrogen-containing compound selected from ammonia, ammonium salts or amines is added to this dispersion of copper compound(s) to cause the inorganic copper compound(s) to form complexes and dissolve in the water. Then, the 2-methyl-4-isothiazolin-3-one, 2-octyl-4-isothiazolin-3-one or 4,5-dichloro-2-octyl-4-isothiazolin-3-one is mixed into the resulting alkaline aqueous solution of the copper compound(s) to obtain the wood preservative composition.

Adjuvants known to those skilled in the art may be added to the wood preservative compositions of the present invention as needed or desired.

The following examples are presented to illustrate further various aspects of the present invention, but are not intended to limit the scope of the invention in any aspect.

Example 1

The following is a description of a method for preparing wood preservative compositions of the present invention. Samples 3, 7, 9, 10, 14 and 16 in Table 2 are examples of wood preservative, compositions of the present invention; the remaining samples are comparative.

Solution A (copper compound preparation)

| A-1 | |
|---|---|
| Basic copper carbonate | 16 |
| 25% ammonia water | 63 |
| ammonium bicarbonate | 9 |
| water | 12 |
| | 100 (wt%) |

| A-2 | |
|---|---|
| Basic copper carbonate | 18 |
| monoethanol amine | 36 |
| water | 46 |
| | 100 (wt%) |

Solution B (isothiazolone preparation)

The isothiazolone preparations were prepared with the isothiazolone compounds expressed in the formula below:

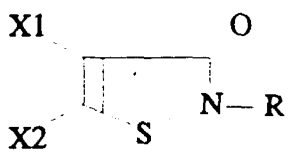

wherein,

X1 and X2 are hydrogen or halogens; and
R is an alkyl group.

The formulations for isothiazolone that contained the various isothiazolone compounds are shown in the following Table 1.

Table 1

| Isothiazolone Formulations | | | | |
|---|---|---|---|---|
| **No.** | **Isothiazolone** | **Formulation Components (%)** | | |
| | | Isothiazolone | PP | Emulsifier |
| B-1 | X1=H X2=H R=CH3 | 10 | 80 | 10 |
| B-2 | X1=H X2=Cl R=CH3 | 10 | 80 | 10 |
| B-3 | X1=H X2=H R=C4H9 | 10 | 80 | 10 |
| B-4 | X1=H X2=Cl R=C4H9 | 10 | 80 | 10 |
| B-5 | X1=H X2=H R=C8H17 | 10 | 80 | 10 |
| B-6 | X1=H X2=Cl R=C8H17 | 10 | 80 | 10 |
| B-7 | X1=Cl X2=Cl R=C8H17 | 10 | 80 | 10 |
| PP: Propylene glycol<br>Emulsifier+ polyoxyethylene nonylphenyl ether (HLB value of 10) | | | | |

Table 2

| Sample | % Copper Compound | | Isothiazolone Compound | | | | | | |
|---|---|---|---|---|---|---|---|---|---|
| | A-1 | A-2 | B-1 | B-2 | B-3 | B-4 | B-5 | B-6 | B-7 |
| 1 | 4 | | | | | | | | |
| 2 | | 4 | | | | | | | |
| 3* | 4 | | 1000 | | | | | | |
| 4 | 4 | | | 1000 | | | | | |
| 5 | 4 | | | | 1000 | | | | |
| 6 | 4 | | | | | 1000 | | | |
| 7* | 4 | | | | | | 1000 | | |
| 8 | 4 | | | | | | | 1000 | |
| 9* | 4 | | | | | | | | 1000 |
| 10* | | 4 | 1000 | | | | | | |
| 11 | | 4 | | 1000 | | | | | |
| 12 | | 4 | | | 1000 | | | | |
| 13 | | 4 | | | | 1000 | | | |
| 14* | | 4 | | | | | 1000 | | |
| 15 | | 4 | | | | | | 1000 | |
| 16* | | 4 | | | | | | | 1000 |

*Preparations according to the present invention

Example 2: Field Anti-Mold Test

A. Specimens and Chemical Treatment

Thirty (30) pieces of hemlock spruce (1x10x50cm) were placed into a covered, 70 L pressure vessel and were subjected to chemical treatement in accordance with the following procedure.

1) The test specimens of hemlock spruce were placed in a pressure vessel and the cover was shut. The pressure was reduced by vacuum pump to 0.08 Mpa and maintained for 30 minutes.
2) While continuously operating the vacuum pump, the previously prepared chemical solution was introduced into the vessel and the vessel was filled with the chemical solution.
3) Compressed air was then charged to the vessel and the vessel pressurized to 0.7 Mpa. The pressure was maintained for three hours. After that, the pressure was released and the solution in the vessel was removed.
4) The atmospheric pressure in the vessel was then reduced to 0.08Mpa. This condition was maintained for thirty minutes and then the test specimens were removed.

B. Anti-Mold Test

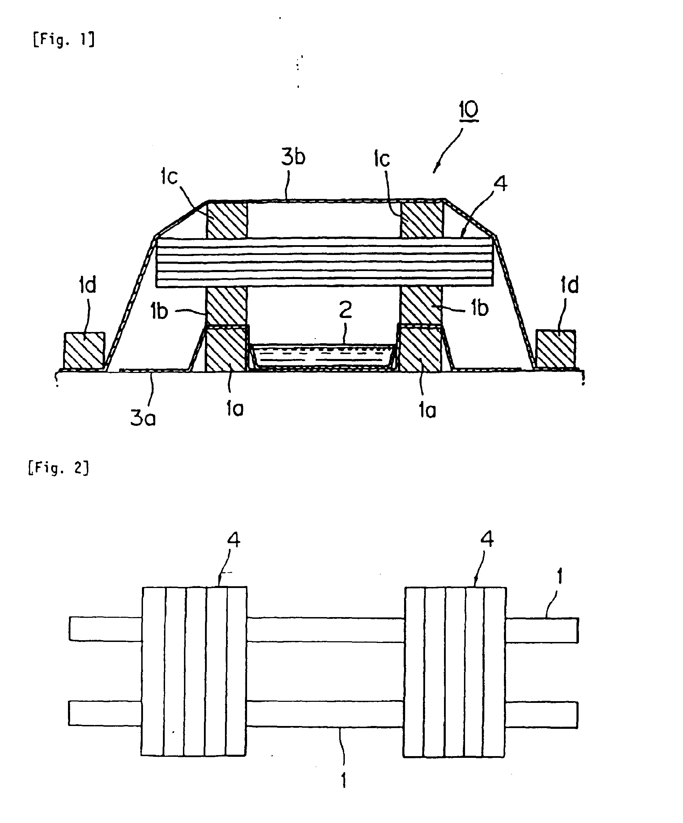

Referring now to the Drawing, Figure **1** shows the cross-section for the field anti-mold test system of wood preservative of the present invention, and Figure **2** shows the location of the test samples within the field anti-mold test system.

As shown in Figure **1**, field anti-mold test system **10** used in this invention consisted of concrete blocks **1a**, **1b**, **1c**, **1d**, water tub **2**, and polyethylene sheets **3a**, **3b**. The field anti-mold test was performed in accordance with following procedure using the field anti-mold test system **10**.

Concrete blocks **1a** were located a distance apart. The concrete blocks were covered by polyethylene sheet **3a**. Water tub **2** was placed on the polyethylene sheet **3a** between the concrete blocks **1a** and **1a**.

The test specimens **4** treated with the wood preservative formulations were bundled as 5 rows x 6 pieces and

placed on the concrete blocks **1b** fifty centimeters from the nearest bundle. Concrete blocks **1c** were located and polyethylene sheet **3b** was added to cover the whole test system, in order to accelerate mold growth. Concrete blocks **1d** were then located on both ends of polyethylene sheet **3b**.

After 1.5 and 3 months, the mold growth on each specimen was measured in accordance with the ratings described in Table 3. The percentages of anti-mold were calculated by the following formula, where the total number of test specimens was 30.

$$\text{Percentage (\%) of anti-mold} = \frac{\text{(Total number of test specimens with damage < 1)}}{\text{(Total number of test specimens)}} \times 100$$

Table 3

| Evaluation of Damage Rating | |
|---|---|
| **Rating** | **Observation** |
| 0 | No appearance of mold, fungi, stain on t surface of specimen |
| 1 | Mold, fungi, stain observed on less than 10% surface of specimen |
| 2 | Mold, fungi, stain observed on 10 to 30% surface of specimen |
| 3 | Mold, fungi, stain observed on more than 30% surface of specimen |
| A damage rating of 1 was determined as having anti-mold activity since in actual use, this slight mold generation does not cause any problem. | |

The results, reported as percent anti-mold, are shown below in Table 4.

Table 4

| Formulation | Component | | % of Anti-Mold | |
|---|---|---|---|---|
| | A component | B component | 1.5 months | 3 months |
| 1 | A-1 | - | 23 | 7 |
| 2 | A-2 | - | 17 | 3 |
| 3* | A-1 | B-1 | 93 | 80 |
| 4 | A-1 | B-2 | 57 | 30 |
| 5 | A-1 | B-3 | 67 | 40 |
| 6 | A-1 | B-4 | 33 | 10 |
| 7* | A-1 | B-5 | 97 | 83 |
| 8 | A-1 | B-6 | 60 | 40 |
| 9* | A-1 | B-7 | 90 | 80 |
| 10* | A-2 | B-1 | 90 | 83 |
| 11 | A-2 | B-2 | 50 | 30 |
| 12 | A-2 | B-3 | 60 | 37 |
| 13 | A-2 | B-4 | 33 | 13 |
| 14* | A-2 | B-5 | 93 | 93 |
| 15 | A-2 | B-6 | 67 | 40 |
| 16* | A-2 | B-7 | 87 | 77 |

* Formulation of the present invention.

These results clearly indicate that the compositions of the present invention, Formulation 3, 7, 9, 10, 14 and 16,

exhibited excellent anti-mold activity, whereas the comparative compositions (Formulations 1, 2, 4-6, 8, 11-13) exhibited poor or only fair anti-mold activity. That is, the combinations of an alkaline wood preservative A-1 or A-2 with an isothiazolone B-1 (2-methyl-4-isothiazolin-3-one), B-2 (2-octyl-4-isothiazolin-3-one) or B-7 (4,5-dichloro-2-octyl-4-isothiazolin-3-one) showed excellent anti-mold activity whereas combinations of A-1 or A-2 with the other isothiazolones were much less effective at anti-mold activity.

The wood preservative compositions of the present invention provide excellent protection from wood rotting microorganisms, as well as protection form mold which fouls surface of wood.

## Claims

**1.** An alkaline wood preservative composition comprising:

(a) at least one isothiazolone compound selected from the group consisting of: 2-methyl-4-isothiazolin-3-one, 2-octyl-4-isothiazolin-3-one, and 4,5-dichloro-2-octyl-4-isothiazolin-3-one;
(b) at least one water-soluble copper complex formed by solubilizing water-insoluble copper salt or copper oxide with a nitrogen-comtaining compound selected from the group consisting of ammonia, ammonium salts, and amines; and
(c) water.

**2.** Composition according to claim 1 wherein the water-insoluble copper salt is selected from the group consisting of: basic copper carbonate, basic copper acetate, basic copper nitrate, basic copper phosphate, basic copper chloride, and copper pyrophosphate.

**3.** Composition according to claim 2 wherein the water-insoluble copper salt is selected from the group consisting of: basic copper carbonate, basic copper phosphate, and copper pyrophosphate.

**4.** Composition according to claim 1 wherein the nitrogen-containing compound is an ammonium salt comprising ammonium bicarbonate.

**5.** Composition according to claim 1 wherein the nitrogen-containing compound is an amine is selected from the group consisting of: monoethanol amine, diethanol amine, triethanol amine, ethylene diamine, 1,2-propane diamine, 1,3-propane diamine, N,N-dimethylethylene diamine, and N,N-diethylethylene diamine.

**6.** Composition according to claim 1 where in the concentration of the isothiazolone compound in the wood preservative composition is from 10 to 10,000 ppm.

[Fig. 1]

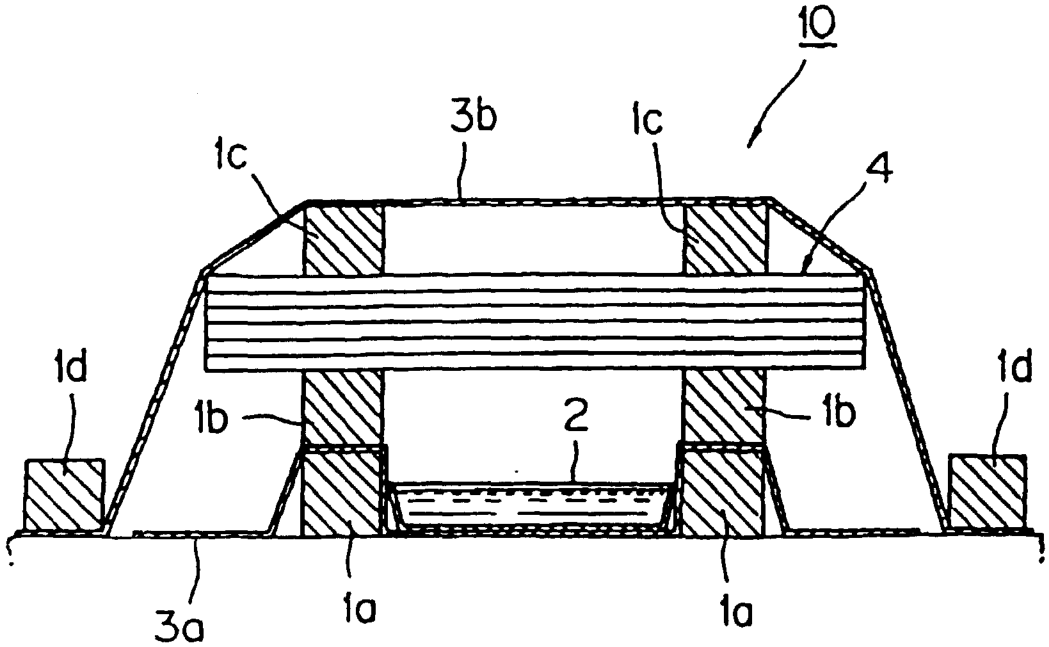


[Fig. 2]